# EUROPEAN PATENT APPLICATION

(11) **EP 3 318 418 A1**
(43) Date of publication of application: **09.05.2018**
(21) Application number: 16821026.8
(22) Date of filing: 01.07.2016
(51) Int. Cl.: B60C 11/00, B60B 9/04, B60C 1/00, B60C 7/00

(54) **TIRE**

(30) Priority: 03.07.2015 JP 2015134563
(71) Applicant: Bridgestone Corporation, Tokyo 104-8340 (JP)
(72) Inventor: NAKAJIMA, Daisuke, Tokyo 104-8340 (JP)
(74) Representative: Oxley, Robin John George
(86) International application number: PCT/JP2016/003160
(87) International publication number: WO 2017/006550

(57) **Abstract**

Provided is a tire capable of improving the wear resistance. The tire comprises: a case portion comprising: an inner cylindrical member; an outer cylindrical member surrounding the inner cylindrical member from a tire radial outer side; and a plurality of connecting members arranged between the inner cylindrical member and the outer cylindrical member and connecting the two cylindrical members; and a tread portion having a tread rubber disposed on a tire radial outer side of the outer cylindrical member, wherein: when a portion of the tread rubber located on a tire radial outer side of a junction of the connecting members joined to the outer cylindrical member is defined as a tread rubber junction, a wear resistance of a first portion of the tread rubber inclusive of the tread rubber junction is larger than a wear resistance of a second portion of the tread rubber other than the first portion.

## Description

### TECHNICAL FIELD

This disclosure relates to a tire that can be used without being filled with pressurized air.

### BACKGROUND

For pneumatic tires that need to be filled with pressurized air and always kept at constant internal air pressure during use, various measures have conventionally been taken to prevent a puncture which leads to such a state where the internal air pressure cannot be kept constant. However, the structure of pneumatic tires makes a puncture unavoidable.

In view of this, "non-air pressure tires" have been proposed in recent years as tires that need not be filled with pressurized air. For example, a "non-air pressure tire" includes: a support structure for supporting a load from the vehicle; a belt layer (omissible) provided on the outer circumferential side of the support structure; and a tread layer provided on the outer side (outer circumferential side) of the belt layer (see Patent Literature (PTL) 1). This support structure is a structure provided with an inner cylindrical member, an outer cylindrical member disposed in a concentric circular shape on a side outer than the inner cylindrical member, and a plurality of connecting members connecting the inner cylindrical member and the outer cylindrical member.

### CITATION LIST

### Patent Literature

PTL1: JP2011-219009A

### SUMMARY

### (Technical Problem)

Such non-pneumatic tire as described in PTL1 is supported by a load from the vehicle via the support structure, and thus does not need to be filled with pressurized air, which prevents puncture thereof. However, since the load is carried by the connecting members connecting the inner cylindrical member and the outer cylindrical member of the support structure, a portion on a tread rubber with a comparatively larger ground contact pressure to a road surface (a tread rubber portion (tread rubber junction) located on a tire radial outer side of a junction joined to the outer cylindrical member of the connecting members) is generated. As a result, in the portion with comparatively high ground contact pressure of the tread rubber, there is a tendency of earlier wear of the tread rubber as compared to a portion with comparatively low ground contact pressure, and thus a wear resistance of the tire cannot be said as sufficient.

Then, this disclosure aims to provide a tire capable of improving the wear resistance.

### (Solution to Problem)

The tire of this disclosure is a tire comprising: a case portion comprising: an inner cylindrical member; an outer cylindrical member surrounding the inner cylindrical member from a tire radial outer side; and a plurality of connecting members arranged between the inner cylindrical member and the outer cylindrical member and connecting the two cylindrical members; and a tread portion having a tread rubber disposed on a tire radial outer side of the outer cylindrical member, wherein: when a portion of the tread rubber located on a tire radial outer side of a junction of the connecting members joined to the outer cylindrical member is defined as a tread rubber junction, a wear resistance of a first portion of the tread rubber inclusive of the tread rubber junction is larger than a wear resistance of a second portion of the tread rubber other than the first portion.

According to the tire of this disclosure, it is possible to improve the wear resistance.

Note that in this disclosure, the "wear resistance" is a performance obtained by testing according to JIS K6264-2:2005 at room temperature (23°C) under the condition of a slip rate of 25% with a Lambourn abrasion tester, calculating a wear amount of a used tread rubber by comparing its weight before and after the test, and comparing with a tread rubber other than the tread rubber subjected to the test.

In this disclosure, "a boundary extends in a tire circumferential direction" means that the boundary extends linearly or curvedly in parallel to the tire circumferential direction, or inclined at an angle of 45° or less with respect to the tire circumferential direction.

In this disclosure, "a boundary extends in a tire width direction" means that the boundary extends linearly or curvedly in parallel to the tire width direction, or inclined at an angle of less than 45° with respect to the tire width direction.

### (Advantageous Effect)

According to this disclosure, it is possible to provide a tire capable of improving the wear resistance.

### BRIEF DESCRIPTION OF THE DRAWINGS

FIG. 1 is a tire side view illustrating a tire according to one embodiment of this disclosure;
FIG. 2 is an enlarged view illustrating an enlarged part of the tire in FIG. 1;
FIG. 3A is a developed view seen from a surface of a tread portion of the tire in FIG. 1, which schematically illustrates a tread rubber structure of the tread portion, and FIGS. 3B to 3D are developed views schematically illustrating varied examples thereof;
FIGS. 4A and 4B are developed views schematically illustrating a tread rubber structure of a tread portion of a tire of a comparative example;
FIG. 5 schematically illustrates a cross section of the tread portion of the tire according to the one embodiment of this disclosure, which is cut by a plane parallel to the tire width direction;
FIG. 6 schematically illustrates cross sections of tread portions of tires according to other embodiments of this disclosure, which are cut by a plane parallel to the tire width direction;
FIG. 7 schematically illustrates a cross section of a tread portion of a tire according to another embodiment of this disclosure, which is cut by a plane perpendicular to the tire width direction; and
FIG. 8 is a tire side view illustrating a tire according to another embodiment of this disclosure.

### DETAILED DESCRIPTION

Hereinafter, embodiments of the disclosure will be described with reference to the drawings.

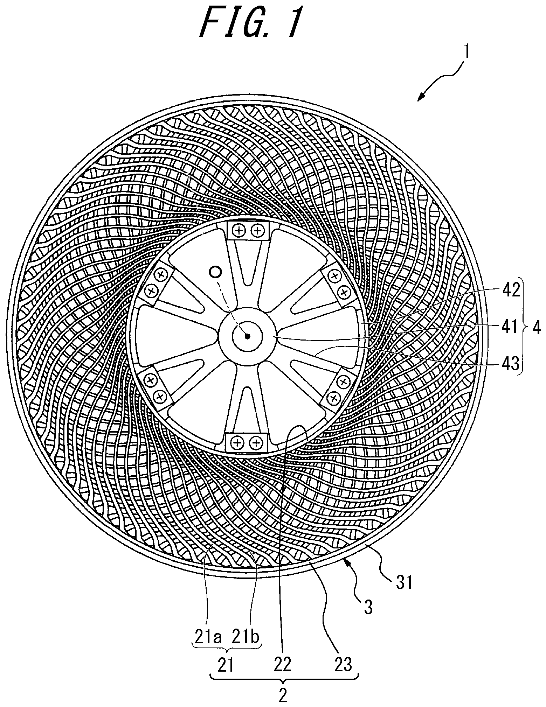

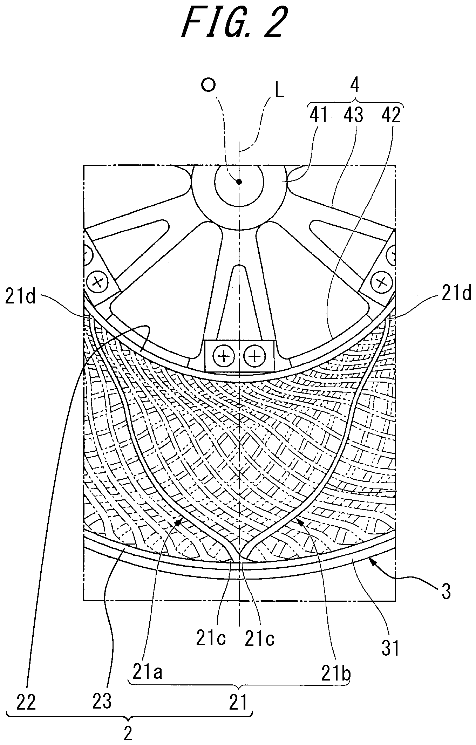

FIG. 1 is a tire side view schematically illustrating a tire 1 according to the one embodiment of this disclosure, which is seen from a side of the tire 1. FIG. 2 is an enlarged view of part of the tire 1 in FIG. 1. Note that in FIG. 2, for the purpose of easy understanding, among a plurality of first connecting plates 21a and a plurality of second connecting plates 21b mentioned below, only one first connecting plate 21a and one second connecting plate 21b are illustrated in solid lines with emphasis.

As illustrated in FIGS. 1 and 2, the tire 1 of the present embodiment includes: a case portion 2 including an inner cylindrical member 22, an outer cylindrical member 23 surrounding the inner cylindrical member 22 from a tire radial outer side, and a plurality of connecting members 21 arranged between the inner cylindrical member 22 and the outer cylindrical member 23. Moreover, the tire 1 includes a tread portion 3 having a tread rubber 31 disposed on a tire radial outer side of the outer cylindrical member 23 (a tire radial outer side of the case portion 2). Further, the tire 1 may include an attachment body 4, which is attached to an axle (not illustrated) and externally covered by the inner cylindrical member 22.

Here, the attachment body 4, the inner cylindrical member 22, the outer cylindrical member 23 and the tread portion 3 are arranged respectively coaxially with an axis in common, and their tire widthwise central portions are in accordance with each other.

From the viewpoint of uniformity of the tire 1, the inner cylindrical member 22 and the outer cylindrical member 23 of the case portion 2 are respectively cylindrical with constant thickness and width. An inner circumferential surface of the inner cylindrical member 22 may be provided with protrusions and recesses, etc. for fitting with the attachment body 4 attached to the axle. Note that although the tire 1 has the attachment body 4 in the illustrated example, but the tire 1 may have, e.g., protrusions and recesses installable to a rim disposed on the inner circumferential surface of the inner cylindrical member 22 instead of the attachment body 4.

In the present embodiment, regarding the inner cylindrical member 22 and the outer cylindrical member 23, the cylindrical members may be respectively divided in the tire width direction (divided at a tire widthwise center in the illustrated example), and may include, e.g., a one-side divided inner cylindrical member and a one-side divided outer cylindrical member located on one side in the tire width direction, and an other-side divided inner cylindrical member and an other-side divided outer cylindrical member located on the other side in the tire width direction. Note that the inner cylindrical member 22 and the outer cylindrical member 23 may be ones without being divided in the tire width direction as well.

The connecting members 21 of the case portion 2 are not limited as long as they connect the inner cylindrical member 22 and the outer cylindrical member 23 to each other, but in the present embodiment, they include the first connecting plates 21a and the second connecting plates 21b with respectively different arranging positions in the tire width direction. A plurality of the first connecting plates 21 a are arranged along the tire circumferential direction at one tire widthwise position with respect to the tire widthwise center, and a plurality of the second connecting plates 21b are arranged along the tire circumferential direction at another tire widthwise position different from the one tire widthwise position with respect to the tire widthwise center. In the present embodiment, the first connecting plates 21 a connect the one-side divided inner cylindrical member and the one-side divided outer cylindrical member, and the second connecting plates 21b connect the other-side divided inner cylindrical member and the other-side divided outer cylindrical member. In total, 60 first connecting plates 21a and second connecting plates 21b are disposed.

The number of the connecting members 21 in total of the first connecting plates 21a and the second connecting plates 21b may be adjusted appropriately. For example, the number is 60 here, but may also be, e.g., 30, 40, 72, 80, and 144.

As illustrated in FIGS. 1 and 2, the first connecting plates 21a and the second connecting plates 21b have opposite inclination directions in the tire circumferential direction with respect to the tire radial direction from the tire radial inner side toward the outer side. Specifically, among the first connecting plates 21a, one end (junction) 21c joined to the outer cylindrical member 23 is located on one tire circumferential side than an other end 21 d joined to the inner cylindrical member 22, and among the second connecting plates 21b, the one end (junction) 21c joined to the outer cylindrical member 23 is located on another tire circumferential side than the other end 21d joined to the inner cylindrical member 22.

Moreover, in the illustrated example, the first connecting plates 21a and the second connecting plates 21b are formed not linearly, but in a manner curved in the tire circumferential direction.

A plurality of the first connecting plates 21a are arranged along the tire circumferential direction respectively at an identical position in the tire width direction, and a plurality of the second connecting plates 21b are arranged along the tire circumferential direction respectively at an identical position in the tire width direction, which is a position spaced from the first connecting plates 21a in the tire width direction.

Note that the plurality of the connecting members 21 may be each arranged at positions symmetrical to each other with respect to an axis O between the inner cylindrical member 22 and the outer cylindrical member 23. Moreover, all connecting members 21 are of the same shape and size, and a width of the connecting members 21 may be smaller than a tire widthwise width of the outer cylindrical member 23. Furthermore, in order to support the load from the vehicle with the case portion 2 and to simultaneously absorb compact from the road surface, the connecting members 21 may be an elastic body.

As illustrated in a group of the first connecting plate 21a and the second connecting plate 21b drawn with solid lines with emphasis in FIG. 2, a shape in a tire side view of each connecting plate 21a, 21b is symmetrical with respect to a virtual line L extending along the tire radial direction and crossing each one end of both connecting plates.

Note that in the present embodiment, the first connecting plates 21a and the second connecting plates 21b are used as the connecting members 21, and the first connecting plates 21a and the second connecting plates 21b extend in a manner inclined with respect to the tire radial direction, but the connecting members 21, including the first connecting plates 21a and the second connecting plates 21b, may have any shape and inclination direction with respect to the tire radial direction. Specifically, the connecting members 21 may, for example, have only one of the first connecting plates 21 a and the second connecting plates 21b, or, be of a plate-like or columnar (cylindrical or prismatic) shape extending in parallel to the tire radial direction (from the inner cylindrical member 22 to the tire radial outer side).

In the present embodiment, all of the inner cylindrical member 22, the outer cylindrical member 23 and the plurality of the connecting members 21 of the case portion 2 may be, for example, formed integrally with a synthetic resin material. More specifically, in the present embodiment, the inner cylindrical member 22 and the outer cylindrical member 23 are respectively divided in the tire width direction, but there is no problem to integrally form the one-side divided inner cylindrical member, the one-side divided outer cylindrical member and the first connecting plates 21 a located on the one side in the tire width direction (a one-side case portion), and to integrally form the other-side divided inner cylindrical member, the other-side outer cylindrical member and the second connecting plates 21b located on the other side in the tire width direction (an other-side case portion). Moreover, all of the inner cylindrical member 22, the outer cylindrical member 23 and the plurality of the connecting members 21 may be formed integrally without being divided in the tire width direction.

In the present embodiment, the one-side case portion and the other-side case portion may be joined to each other via welding, melting or adhesion. Note that the one-side case portion and the other-side case portion may be formed with either different materials or an identical material, such as metal materials and rigid resin materials, but from the viewpoint of weight reduction and uniformity, it is preferable to form them with an identical synthetic resin material, particularly a thermoplastic resin material.

The attachment body 4 usable in the present embodiment includes: a holding cylindrical portion 41 in which an end of the axle is held; an outer ring portion 42 surrounding the holding cylindrical portion 41 from the tire radial outer side; and a plurality of ribs 43 connecting the holding cylindrical portion 41 and the outer ring portion 42 (see FIGS. 1 and 2).

The holding cylindrical portion 41, the outer ring portion 42, and the ribs 43 may be integrally formed of a metal material such as an aluminum alloy. The holding cylindrical portion 41 and the outer ring portion 42 are each shaped like a cylinder, and disposed coaxially with the axis O. The plurality of ribs 43 are arranged at a constant spacing in the circumferential direction.

The tread portion 3 has on its surface a vulcanized tread rubber 31, which becomes a tread surface. Moreover, the tread portion 3 is disposed on the tire radial outer side of the outer cylindrical member 23 by, e.g., adhering with an adhesive, etc. Note that if necessary, a belt including a rubber-coated cord layer, etc. may be disposed inside the tread portion 3 or between the tread portion 3 and the outer cylindrical member 23.

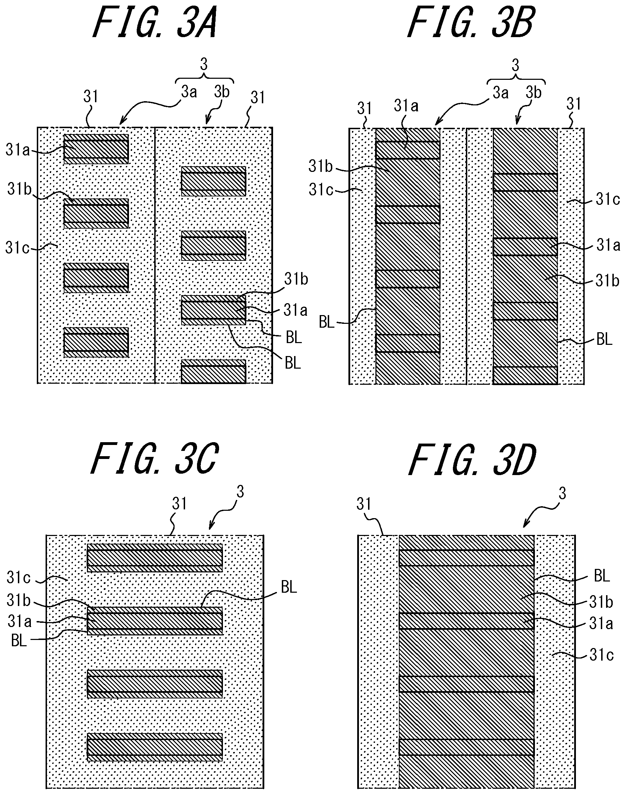

In the present embodiment, as illustrated in FIG. 3A, the tread portion 3 may be divided into a one-side tread portion 3a and an other-side tread portion 3b in the tire width direction, in accordance with the one-side case portion in the part on the one side in the tire width direction and the other-side case portion on the other side in the tire width direction of the case portion 2. Moreover, in the present embodiment, when respectively arranging the one-side tread portion 3a and the other-side tread portion 3b on the one-side case portion and the other-side case portion, and connecting the one-side case portion and the other-side case portion, one single tread portion 3 may be obtained by welding, melting or adhering the tread portions 3a, 3b to each other. Note that a tread portion 3 without being divided may be used with respect to the case portion 2 divided into the one-side case portion and the other-side case portion.

Here, in the tread rubber 31, the part located on the tire radial outer side of the junction (one end of the connecting members 21) 21c of the connecting members 21 joined to the outer cylindrical member 23 is referred to as the tread rubber junction 31 a. More specifically, the tread rubber junction 31 a is a part of the tread rubber 31 in which the junction 21c of the connecting members 21 is projected on the tire radial outer side in accordance with the tread rubber 31.

In the present embodiment, as illustrated in FIG. 3A, the wear resistance of the first portion 31b of the tread rubber 31 inclusive of the tread rubber junction 31a is set larger than the wear resistance of the second portion 31c of the tread rubber 31 other than the first portion 31 a. Note that the first portion 31b specifically includes the tread rubber junction 31a and the tread rubber 31 located around it, and as for the example of FIG. 3A, includes the tread rubber junction 31 a and the tread rubber 31 on its both tire circumferential sides.

Moreover, in the present embodiment, a boundary BL of the first portion 31b and the second portion 31c, which have different wear resistance from each other, extends in the tire width direction and the tire circumferential direction. In other words, the second portion 31c is disposed between first portions 31b adjacent in the tire circumferential direction, and the second portion 31c is disposed between first portions 31b spaced from each other in the tire width direction and between the first portions 31b and the tread edges.

Here, the function and effect of the tire 1 according to the embodiment of this disclosure is described.

In a conventional tire including: a case portion including an inner cylindrical member, an outer cylindrical member and connecting members; and a tread portion, since the connecting members carry the load, a part with a comparatively large ground contact pressure is generated on the tread rubber, and therefore, in the part with a comparatively large ground contact pressure, there is a tendency that the tread rubber is worn earlier than a part with a comparatively small ground contact pressure, and the wear resistance of the tire cannot be said as sufficient.

Then, in the tire 1 of the present embodiment, since the wear resistance of the first portion 31b of the tread rubber 31 inclusive of the tread rubber junction 31a is larger than the wear resistance of the second portion 31c, the first portion 31b inclusive of the tread rubber junction 31a, which has a larger ground contact pressure, is unlikely to be worn, and thus progress of wear of the entire tread is equalized, which improves the wear resistance of the tire 1.

Therefore, according to the tire 1 of this disclosure, it is possible to improve the wear resistance of the tire 1.

The method for adjusting the wear resistance of the first portion 31b and the second portion 31c is not specifically limited, and may be a well-known method. Examples of a method for raising the wear resistance include: increasing a particle size of a carbon black contained in the tread rubber (i.e., a rubber composition for forming the tread rubber) of the part of which the wear resistance is to be raised; increasing an amount of the carbon black contained in the tread rubber (i.e., the rubber composition for forming the tread rubber); increasing an amount of a vulcanizing agent contained in the rubber composition such as sulfur; and a combination thereof. By increasing the amount of the vulcanizing agent contained in the rubber composition, a formed vulcanization mesh is increased, and the wear resistance of the part constituted by the rubber composition is raised.

In the present embodiment, the wear resistance of the first portion 31b of the tread rubber 31 is preferably 1.2 times or more, more preferably 1.2 to 3 times of the wear resistance of the second portion 31c of the tread rubber 31.

By setting the wear resistance of the first portion 31b to 1.2 times or more of the wear resistance of the second portion 31c, it is possible to sufficiently delay the progress of wear of the first portion 31b due to high ground contact pressure, and to sufficiently improve the wear resistance of the tire 1. Moreover, by setting the wear resistance of the first portion 31b to 3 times or less of the wear resistance of the second portion 31 c, it is possible to avoid a risk such that the wear resistance of the first portion 31b is large, and the second portion 31c becomes more likely to be worn than the first portion 31b.

In the tire 1 of the present embodiment, as illustrated in FIG. 3A, it is preferable that the boundary BL of the first portion 31b and the second portion 31c, which have different wear resistance from each other, extends in the tire circumferential direction. According to this configuration, it is possible to suppress unevenness of the wear resistance in the tire width direction.

Moreover, in the tire 1 of the present embodiment, as illustrated in FIG. 3A, it is preferable that the boundary BL of the first portion 31b and the second portion 31c, which have different wear resistance from each other, extends in the tire width direction. According to this configuration, it is possible to suppress unevenness of the wear resistance in the tire circumferential direction.

Note that in the present embodiment, if the first portion 31b is inclusive of the tread rubber junction 31 a, it may have an area of any value within the tread pattern, but the first portion 31b preferably has an area of 1 to 10 times, more preferably 1 to 2 times, further more preferably 1 to 1.5 times of an area of the tread rubber junction 31a. This is because that it is possible to uniformly control the wear resistance of the tread rubber 31.

In the present embodiment, although not illustrated in FIG. 3, for example, a plurality of grooves extending in the tire circumferential direction and grooves extending in the tire width direction may be optionally formed on the surface of the tread.

In the present embodiment, as illustrated in FIG. 3A, the first portion 31b includes the tread rubber junction 31a and the tread rubber 31 on its both tire circumferential sides (in the first portion 31b, the boundary BL of the first portion 31b and the second portion 31c, which have different wear resistance from each other, extends in the tire width direction and the tire circumferential direction), but may also be as illustrated in FIG. 3B (the varied example of the embodiment as illustrated in FIG. 3A). In FIG. 3B, the first portion 31b includes a plurality of tread rubber junctions 31a lined up in the tire circumferential direction in a manner spaced from each other in the tire circumferential direction, and extends continuously in the tire circumferential direction, its width being identical to the width of the tread rubber junctions 31a. In other words, in the varied example of the embodiment as illustrated in FIG. 3B, the boundary BL of the first portion 31b and the second portion 31c, which have different wear resistance from each other, extends in the tire circumferential direction, but does not extend in the tire width direction.

Therefore, in the varied example of the embodiment as illustrated in FIG. 3B, since the boundary BL of the first portion 31b and the second portion 31c extends in the tire circumferential direction but does not extend in the tire width direction, it is possible to suppress unevenness of wear in the tire width direction and improve tire durability, and to simultaneously simplify manufacture of the tread rubber 31.

In the present embodiment, as illustrated in FIG. 3A, the tread portion may be divided into the one-side tread portion 3a and the other-side tread portion 3b, while regarding this, in the varied example of the embodiment as illustrated in FIGS. 3C and 3D, the tread portion 3 and the case portion may be not divided in the tire width direction. Therefore, two rows of the tread rubber junctions 31a and the first portions 31b corresponding to the connecting members 21 exist within the tread rubber 31 in the embodiment as illustrated in FIGS. 3A and 3B, while one row of the tread rubber junction portions 31a and the first portions 31b exist in the tread rubber 31 as illustrated in FIGS. 3C and 3D.

Therefore, in the varied example of the embodiment as illustrated in FIGS. 3C and 3D, since the first portions 31b are in one row in accordance with the case portion, the tire can be easily formed.

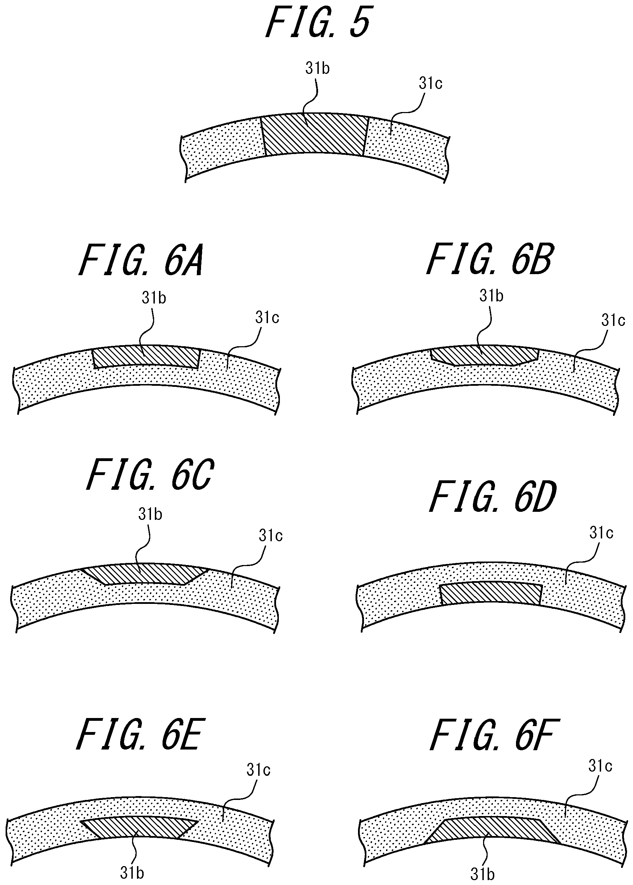

FIG. 5 schematically illustrates a cross section of the tread portion of the tire according to the one embodiment of this disclosure, which is cut by a plane parallel to the tire width direction. More specifically, it is a cross-sectional view of the first portion 31b located at an uppermost position in FIG. 3C, which is cut by a plane parallel to the tire width direction. In the present embodiment, as illustrated in FIG. 5, in a part of the tread rubber 31 which is located on a tire radial outer side of the junction 21c of the connecting members 21, the first portion 31b may be arranged in the entire thickness in the tire radial direction.

FIG. 6 schematically illustrates a cross section of the tread portion of the tire according to other embodiments of this disclosure, which is cut by a plane parallel to the tire width direction. More specifically, it is a cross-sectional view of the first portion 31b located at an uppermost position in FIG. 3C, which is cut by a plane parallel to the tire width direction. As illustrated in FIG. 6, in these embodiments, in a part of the tread rubber 31 which is located on a tire radial outer side of the junction 21c of the connecting members 21, the first portion 31b may be arranged in a part of the thickness in the tire radial direction. For example, according to FIGS. 6A to 6C, the first portion 31b may be arranged on a part of the tire radial outer side of the tread rubber 31. Alternatively, for example, according to FIGS. 6D to 6F, the first portion 31b may be arranged on a part of the tire radial inner side of the tread rubber 31. The shape of the first portion 31b may be rectangular as illustrated in FIGS. 6A and 6D, trapezoidal as illustrated in FIGS. 6C, 6E and 6F, or a shape as illustrated in FIG. 6B such that in a tire radial outer side surfacial portion of the tread rubber 31, the first portion 31b extends vertically or substantially vertically from a tire radial outer surface toward the tire radial inner side as illustrated in FIG. 6A, with its angles on a tire radial inner portion of the first portion 31b in FIG. 6A cut out. In the case where the shape of the cross section of the first portion 31b is trapezoidal, a side on the tire radial inner side may be longer than a side on the tire radial outer side (e.g., FIG. 6F), and the side on the tire radial outer side may be longer than the side on the tire radial inner side as well (e.g., FIGS. 6C and 6E). Among, these, the shapes and positions of the first portion 31b in FIGS. 6B and 6E are preferable.

Moreover, FIGS. 5 and 6A to 6F are examples, and the shapes and positions of the first portion 31b illustrated therein may be approximately combined. For example, although not illustrated, a first portion 31b having the shape as illustrated in FIG. 6B may be arranged at the position of the first portion 31b in FIG. 6E.

The method for forming the first portion 31b as illustrated in FIG. 5 and FIGS. 6A to 6F is not specifically limited, and may be a well-known method. For example, the first portion 31b may be formed by arranging or stacking an unvulcanized or vulcanized tread rubber for respectively forming the second portion 31c and the first portion 31b, which is in a sheet-like shape, etc., and vulcanizing the same if necessary. For example, in the case of FIG. 5, the formation may be performed by separately arranging or stacking on a mold the tread rubber for forming the second portion 31c and the tread rubber for forming the first portion 31b. Otherwise, for example, in the case where the first portion 31b is located on the tire radial outer side as illustrated in FIG. 6A, the formation may be performed by arranging or stacking only the tread rubber for forming the second portion 31c on the tire radial inner side, and then separately arranging or stacking thereon (on the tire radial outer side) the tread rubber for forming the second portion 31c and the tread rubber for forming the first portion 31b. Moreover, for example, in the case where the first portion 31b is located on the tire radial outer side as illustrated in FIG. 6D, the formation may be performed via a reverse procedure of the case of FIG. 6A, i.e., separately arranging or stacking on a mold the tread rubber for forming the second portion 31c and the tread rubber for forming the first portion 31b, and then arranging or stacking thereon (on the tire radial outer side) only the tread rubber for forming the second portion 31 c.

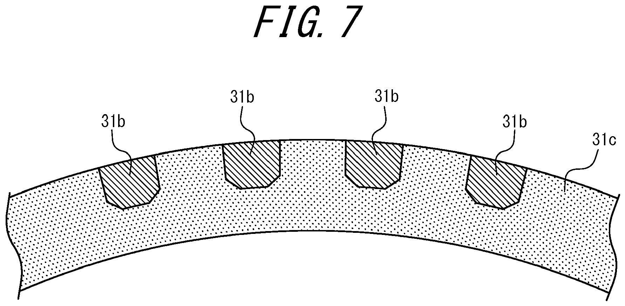

FIG. 7 schematically illustrates a cross section of the tread portion of the tire according to another embodiment of this disclosure, which is cut by a plane perpendicular to the tire width direction. More specifically, it is a cross-sectional view of the first portion 31b of FIG. 3C, which is cut by a plane perpendicular to the tire width direction. As illustrated in FIG. 7, in this cross section, the first portion 31b with the shape and the position as illustrated in FIG. 6B may be arranged as well. In the present embodiment, the shape and the position of the first portion 31b is exemplified as the same shape and position as the first portion 31b of FIG. 6B without being limited thereto, and the shapes and the positions of the first portion 31b of FIGS. 5 and 6A to 6F may be appropriately combined.

In FIGS. 5 to 7, the shape and the position of the first portion 31b has been described with the case of FIG. 3C as an example without being limited thereto, and in FIGS. 3A, 3B and 3D, a first portion 31b selected from the shapes and positions as described in FIGS. 5 to 7 may be arranged as well.

As illustrated in FIGS. 3A to 3C, in the case where a plurality of the first portions 31b exist, the first portions 31b may be either identical to or different form each other. Moreover, for example, in the case of FIG. 3A, there is no problem that the shapes and the positions of the first portions 31b of the one-side tread portion 3a are totally the same, the shapes and the positions of the first portions 31b of the other-side tread portion 3b are totally the same, and at least one among the shapes and the positions of the first portions 31b of the one-side tread portion 3a and at least one among the shapes and the positions of the first portions 31b of the other-side tread portion 3b are different from each other. For example, in the case of FIG. 3A, there is no problem that the first portions 31b of the one-side tread portion 3a have the shape and the position as illustrated in FIG. 6B, and the first portions 31b of the other-side tread portion 3b have the shape and the position as illustrated in FIG. 6E.

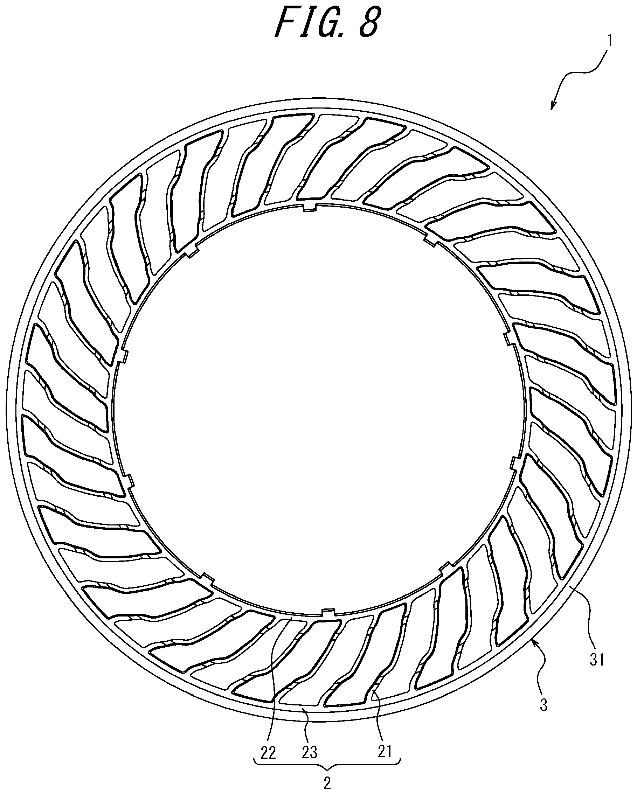

FIG. 8 is a tire side view illustrating a tire according to another embodiment of this disclosure. In the present embodiment, as mentioned above, the connecting members 21 are of only one type extending in the same direction. In the present embodiment, since the connecting members are of only one type, the tread portion corresponds to, e.g., FIG. 3C or 3D. Note that in the example of FIG. 8, the tire 1 does not have the attachment body 4, but may have the attachment body 4 as illustrated in FIG. 1 as well.

As mentioned above, the connecting members may be either of only one type as exemplified in FIG. 8 or of two types (the first connecting plates 21a and the second connecting plates 21b) as exemplified in FIG. 1. In the case where the connecting members are of two or more types, the connecting members of each type may have either the same extension direction and shape or a combination of different ones. The connecting members are preferably of only one type.

The foregoing explains embodiments of the disclosure with reference to the drawings. However, the tire described herein is not particularly limited to the aforementioned examples, and appropriate changes may be made.

### EXAMPLES

The disclosure will be described further in detail by Examples hereinafter without being restricted thereto by any means.

In order to ensure the effect of the tire of this disclosure, tires of the examples and the comparative examples as described below were manufactured and evaluated.

Upon manufacture of the tires of the examples and the comparative examples, in each sample tire, Rubber Members 1 to 5 having the formulation as indicated in the following Table 1 were used in the tread rubber.

Note that the "NS" in the table refers to a vulcanization accelerator NS (N-t-butyl-2-benzothiazylsulfenamide), and the "CZ" refers to a vulcanization accelerator ("Nocceler CZ", manufactured by Ouchi Shinko Chemical Industrial Co., Ltd.).

**[Table 1]**

| | | Rubber member 1 | Rubber member 2 | Rubber member 3 | Rubber member 4 | Rubber member 5 |
|---|---|---|---|---|---|---|
| Formulation (mass ratio) | NR | 0 | 55 | 55 | 55 | 55 |
| | SBR | 100 | 45 | 45 | 45 | 45 |
| | Carbon black (ISAF) | - | 40 | - | 80 | 100 |
| | Carbon black (SAF) | 45 | - | 75 | - | - |
| | Aromatic oil | 15 | 0 | 10 | 15 | 25 |
| | Rosin | 0 | 15 | 15 | 15 | 15 |
| | Rosin Stearic acid | 1 | 1 | 1 | 1 | 1 |
| | Flowers of zinc | 2 | 2 | 2 | 2 | 2 |
| | NS | 1 | 1 | 1 | 1 | 1 |
| | CZ | 1 | 1 | 1 | 1 | 1 |
| | Sulfur | 2 | 2 | 2 | 2 | 2 |
| Wear resistance | | 100 | 120 | 200 | 300 | 400 |

Note that the "wear resistance" here was obtained according to JIS K 6264-2:2005, by testing at room temperature (23°C) under a condition of a slip rate of 25% with a Lambourn abrasion tester, calculating each wear amount of Rubber Members 1 to 5 by comparing their weights before and after the test, and indexing a reciprocal of the wear amount with Rubber Member 1 as 100. A larger value indicates excellent wear resistance.

The tire of Example 1 has the tread rubber structure as illustrated in FIG. 3A, and uses the aforementioned Rubber Member 1 in the first portion and the Rubber Member 4 in the second portion 31c. Moreover, the tire of Example 1 has a divided case portion, which is constituted by the one-side case portion and the other-side case portion as illustrated in FIGS. 1 and 2.

The tires of Examples 2 to 4 and 9 are similar as the tire of Example 1 except that the tread rubber structure and the rubber member of the tread rubber are changed as indicated in Table 2.

Moreover, the tires of Examples 5 to 8 are similar as the tire of Example 1 except that they have undivided case portions and their tread rubber structure and rubber member of tread rubber are changed as indicated in Table 2.

The tires of Comparative Examples 1 to 4 are similar as the tire of Example 1 except that the tread rubber structure and the rubber member of the tread rubber are changed as indicated in Table 2.

Moreover, the tires of Comparative Examples 5 to 8 are similar as the tire of Example 1 except that they have undivided case portions and their tread rubber structure and rubber member of tread rubber are changed as indicated in Table 2.

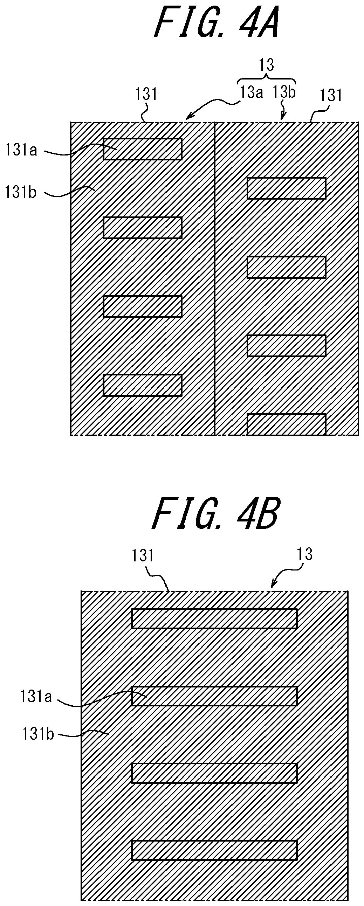

Note that the reference signs 13, 13a, 13b, 131, 131a, 131b in FIGS. 4A and 4B illustrating the tread rubber structures of the tires of Comparative Examples 1 to 8 respectively indicate the tread portion, the one-side tread portion, the other-side tread portion, the tread rubber, the tread rubber junction of the tread rubber, and the first portion inclusive of the tread rubber junction of the tires of the comparative examples.

The aforementioned tires of Examples 1 to 9 and Comparative Examples 1 to 8 were subjected to evaluation of the wear resistance as described below.

The evaluation of the wear resistance was performed by mounting the aforementioned sample tires to a drum tester. The tire, applied with a load of 650N, was run at a speed of hour of 60 km/h for 400 hours, and then a difference between a portion with a largest degree of wear and a portion with a smallest degree of wear (a length measured in the tire radial direction) was measured. Reciprocals of the differences of wear of each sample tire were indexed respectively with the value of the tire of Comparative Example 1 as 100. A larger index value indicates a smaller difference of wear, and thus indicates excellent wear resistance.

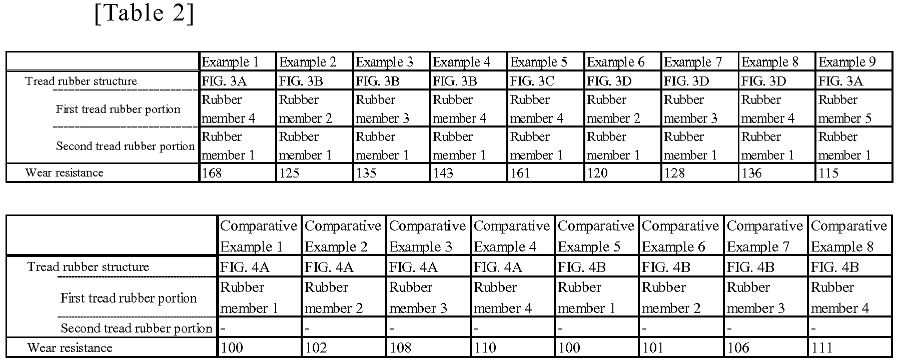

As indicated in Table 2, it is understood that since the tires of Examples 1 to 9 have a wear resistance of the first portion inclusive of the tread rubber junction larger than the wear resistance of the second portion, they have improved wear resistance as compared to the tires of Comparative Examples 1 to 8, which have only the first portion without the second portion.

### INDUSTRIAL APPLICABILITY

According to this disclosure, it is possible to provide a tire capable of improving the wear resistance.

### REFERENCE SIGNS LIST

- 1: tire
- 2: case portion
- 21: connecting member
- 21a: first connecting plate
- 21b: second connecting plate
- 21c: one end (junction)
- 21d: other end
- 22: inner cylindrical member
- 23: outer cylindrical member
- 3, 13: tread portion
- 3a, 13a: one-side tread portion
- 3b, 13b: other-side tread portion
- 31, 131: tread rubber
- 31a, 131a: tread rubber junction
- 31b, 131b: first portion
- 31c: second portion
- 4: attachment body
- 41: holding cylindrical portion
- 42: outer ring portion
- 43: rib
- BL: boundary
- O: axis
- L: virtual line

## Claims

1. A tire comprising:
a case portion comprising:
an inner cylindrical member;
an outer cylindrical member surrounding the inner cylindrical member from a tire radial outer side; and
a plurality of connecting members arranged between the inner cylindrical member and the outer cylindrical member and connecting the two cylindrical members; and
a tread portion having a tread rubber disposed on a tire radial outer side of the outer cylindrical member, wherein:
when a portion of the tread rubber located on a tire radial outer side of a junction of the connecting members joined to the outer cylindrical member is defined as a tread rubber junction, a wear resistance of a first portion of the tread rubber inclusive of the tread rubber junction is larger than a wear resistance of a second portion of the tread rubber other than the first portion.

2. The tire according to claim 1, wherein:
a boundary of the first portion and the second portion extends in a tire circumferential direction.

3. The tire according to claim 1 or 2, wherein:
a boundary of the first portion and the second portion extends in a tire width direction.

4. The tire according to any one of claims 1 to 3, wherein:
the wear resistance of the first portion is 1.2 times or more of the wear resistance of the second portion.

5. The tire according to any one of claims 1 to 4, wherein:
the wear resistance of the first portion is 1.2 to 3 times of the wear resistance of the second portion.

6. The tire according to any one of claims 1 to 5, wherein:
a particle size of a carbon black contained in the first portion is larger than a particle size of a carbon black contained in the second portion.

7. The tire according to any one of claims 1 to 6, wherein:
an amount of carbon black contained in the first portion is larger than an amount of carbon black contained in the second portion.
